# EUROPÄISCHE PATENTSCHRIFT

(11) **EP 1 230 782 B1**
(45) Veröffentlichungstag und Bekanntmachung des Hinweises auf die Patenterteilung: **07.05.2008**
(21) Anmeldenummer: 00988580.7
(22) Anmeldetag: 10.11.2000
(51) Int. Cl.: H04M 1/725, H04M 1/247

(54) **TELEKOMMUNIKATIONS-ENDGERÄT UND MULTIFUNKTIONS-BEDIENTEIL**
TELECOMMUNICATION TERMINAL AND MULTIFUNCTION OPERATING DEVICE
TERMINAL DE TELECOMMUNICATIONS ET APPAREIL DE COMMANDE A FONCTIONS MULTIPLES

(30) Priorität: 17.11.1999 DE 19955308
(43) Veröffentlichungstag der Anmeldung: 14.08.2002
(73) Patentinhaber: SIEMENS AKTIENGESELLSCHAFT, 80333 München (DE)
(72) Erfinder: NGUYEN THIEN, Nhu, 93057 Regensburg (DE)
(86) Internationale Anmeldenummer: PCT/DE2000/003940
(87) Internationale Veröffentlichungsnummer: WO 2001/037520

(56) Entgegenhaltungen:
- EP-A- 0 602 840
- EP-A- 0 669 728
- EP-A- 0 940 295
- DE-A- 19 716 316
- DE-C- 19 743 283
- US-A- 5 239 700
- US-A- 5 923 737

## Beschreibung

Die Erfindung betrifft ein Telekommunikations-Endgerät mit einer Anzeigeeinrichtung, auf der Verbindungen mit mehreren Fernsprechteilnehmern darstellbar sind, und ein Multifunktions-Bedienteil insbesondere für Kraftfahrzeuge mit einem solchen Telekommunikations-Endgerät.

Aus der Patentanmeldung EP 0 659 006 A2 ist ein Audio-Konferenzsystem für ein Computer-Netzwerk bekannt. Für die Kommunikation steht einem Benutzer ein Computer mit Bildschirm zur Verfügung. Der Bildschirm ist in mehrere Bereiche unterteilt, wobei die Teilnehmer einer Audio-Konferenz jeweils durch einen Bildschirmbereich repräsentiert werden. Jeder Benutzer kann die Lautstärke der anderen Teilnehmer einstellen. Hierfür stehen für jeden Bildschirmbereich Tasten zur Verfügung. Jedoch sind keine Mittel offenbart, mit denen ein bestimmter Konferenzteilnehmer auf dem Bildschirm ausgewählt werden könnte, um anschließend den Status einer Fernsprechverbindung, wie Gespräch aufnehmen oder Gespräch beenden, zu beeinflussen.

Aus der Offenlegungsschrift DE 197 16 316 A1 ist eine Telekommunikationseinrichtung mit einer Anzeigeeinrichtung bekannt, auf der Telekommunikationsanschlüsse als grafische Objekte dargestellt sind. Durch Auswahl und Auslösen eines solchen grafischen Objekts mit einem Cursor und einer Maustaste kann eine Verbindung zu einem Fernsprechteilnehmer aufgebaut werden. Durch Betätigung einer Taste kann die bestehende Fernsprechverbindung in einen Wartezustand versetzt werden, und eine weitere Fernsprechverbindung kann aufgebaut werden. Will der Benutzer gleichzeitig mit beiden Fernsprechteilnehmern sprechen, so kann er dies durch Betätigen einer Taste oder einer Befehlsfläche erreichen.

Aus der Patentschrift EP 0 366 132 B1 ist eine Multifunktions-Bedieneinrichtung bekannt, bei der die Auswahl von Menüs und die Auswahl individueller Funktionen mittels eines Drehschalters erfolgt. Das Auslösen einer Funktion erfolgt durch eine Axialbewegung des Drehschalters.

Aus der Patentanmeldung EP 0 872 994 A1 ist ein Telefongerät mit einem berührungsempfindlichen Bildschirm bekannt. Der Bildschirm weist einen balkenförmigen Randbereich mit einer Mehrzahl von dynamischen Menüpunkten auf. Beim Betätigen einer Hilfetaste werden zu allen auf dem Bildschirm dargestellten Menüpunkten gleichzeitig erläuternde Informationen angezeigt.

Aus der DE 197 43 283 C1 ist eine multifunktionale Bedieneinheit für Kommunikationsendgeräte bekannt. Die multifunktionale Bedieneinheit weist ein mit einem Arbeitsfenster verbundenes Dialogsystem auf. Das Dialogsystem weist einen Trackpoint, ein den Trackpoint umgebendes Anzeigefeld zur dynamischen Anzeige der auszuwählenden und ausgewählten Funktionen und eine Bestätigungstaste auf. Der Trackpoint ist von einem Navigationsfeld umgeben. In dem Anzeigefeld können je nach Anwendung eine Vielzahl von Layouts realisiert werden, die über den Trackpoint und das Navigationsfeld angewählt werden. Das Dialogsystem der multifunktionalen Bedieneinheit kann als Hardwaremodul oder Grafik-Objekt realisiert werden.

Aus der US 5,239,700 ist ein multifunktionelles Informationssystem für ein Kraftfahrzeug bekannt. Das Informationssystem ist nicht nur mit einer Antriebsmaschine und/oder Instrumenten des Kraftfahrzeugs gekoppelt, sondern auch mit elektrischen Geräten, die in dem Kraftfahrzeug angeordnet sind und die zeitweise von einem Fahrer des Kraftfahrzeugs aktiviert und/oder kontrolliert werden. Ein Display des Informationssystems ist so aufgeteilt, dass Informationen der Instrumente und/oder der elektrischen Geräte gleichzeitig darstellbar sind.

Aus der EP 0 602 840 A1 ist eine Vorrichtung zum Telefonieren über einen Computer bekannt. Die Vorrichtung hat im Wesentlichen die Form eines Telefonhörers und hat zumindest ein Bedienelement, das so angeordnet ist, dass es während des Telefonierens bedient werden kann. Das Bedienelement umfasst vorzugsweise eine Rollkugel ("Trackball") oder einen Joystick.

Aus der US 5,923,737 ist eine Kommunikationseinheit für ein Kommunikationssystem bekannt. Die Kommunikationseinheit umfasst einen Bildschirm, auf dem mehrere Status von Kommunikationsverbindungen zu weiteren Kommunikationseinheiten dargestellt sind. Die weiteren Kommunikationsverbindungen und die Status der Kommunikationsverbindungen sind anhand von Symbolen als Gesprächsszenario dargestellt.

Es ist ein Ziel der Erfindung, ein Telekommunikations-Endgerät und ein Multifunktions-Bedienteil bereitzustellen, das bei einer Mehrzahl von Fernsprechteilnehmern die Beeinflussung des Status einer Fernsprechverbindung auf benutzerfreundliche Weise ermöglicht.

Dieses Ziel wird mit einem Telekommunikations-Endgerät und einem Multifunktions-Bedienteil erreicht, wie sie in den unabhängigen Patentansprüchen definiert sind. Vorteilhafte Weiterbildungen der Erfindung sind in den Unteransprüchen angegeben.

Auf der Anzeigeeinrichtung sind Fernsprechteilnehmer übersichtlich angeordnet. Mit dem Drehknopf kann auf besonders einfache Weise zwischen den Fernsprechteilnehmern gewechselt werden, um bestimmte Aktionen auszulösen oder den Status der betreffenden Fernsprechverbindung zu ändern. Ein mit diesem Bedienelement ausgewählter Teilnehmer wird auf der Anzeigeeinrichtung hervorgehoben dargestellt. An dem Telekommunikations-Endgerät sind mehrere Tasten angeordnet, die jeweils mit unterschiedlichen Funktionen belegbar sind. Zumindest einer der Tasten ist in Abhängigkeit vom Status einer Fernsprechverbindung eine Funktion zugeordnet. Die Funktion ist von der Anzeigeeinrichtung visuell durch einen Bezeichner erläutert, der benachbart zu der Tast ausgegeben ist. Die aktive Funktion einer Taste wird durch die Anzeigeeinrichtung visuell dargestellt.

Beispielsweise kann aus einem laufenden Gespräch zu einem neu eingehenden Anruf gewechselt werden. Der neue Anruf kann beispielsweise abgewiesen, angenommen, gehalten oder in eine Konferenz einbezogen werden.

Mehrere während eines laufenden Gesprächs zusätzlich eingehende Anrufe oder neue Fernsprechteilnehmer können zum Beispiel durch die Reihenfolge der Anrufe, die Telefonnummer der Anrufer oder die Namen der Anrufer identifiziert und dargestellt werden.

Eine Mehrfachbelegung einer Taste ist besonders vorteilhaft, wenn das Telekommunikations-Endgerät über ein Multifunktions-Bedienteil betätigt wird. Ein solches Multifunktions-Bedienteil kann beispielsweise in einem Fahrzeug angeordnet sein und zusätzlich zur Steuerung von Applikationen wie Audio-Geräten, Fernseher, Navigationssystem und Klimaanlage dienen.

Das Telekommunikations-Endgerät eignet sich auch für Telefonie über Internet und die gleichzeitige Übertragung von Bildinformation. Die Bildinformation wird in dem für den betreffenden Fernsprechteilnehmer bestimmten Sektor der Anzeigeeinrichtung dargestellt.

Weitere Vorteile, Merkmale und Anwendungsmöglichkeiten der Erfindung ergeben sich aus der nachfolgenden Beschreibung von Ausführungsbeispielen in Verbindung mit den Zeichnungen. Es zeigen:
- Figur 1: ein Fahrerinformationssystem,
- Figur 2: ein Telekommunikations-Endgerät,
- Figur 3: ein Multifunktions-Bedienteil,
- Figur 4: die Visualisierung einer Telefonkonferenz, und
- Figur 5: die Visualisierung mehrerer parallel geführter Telefongespräche.

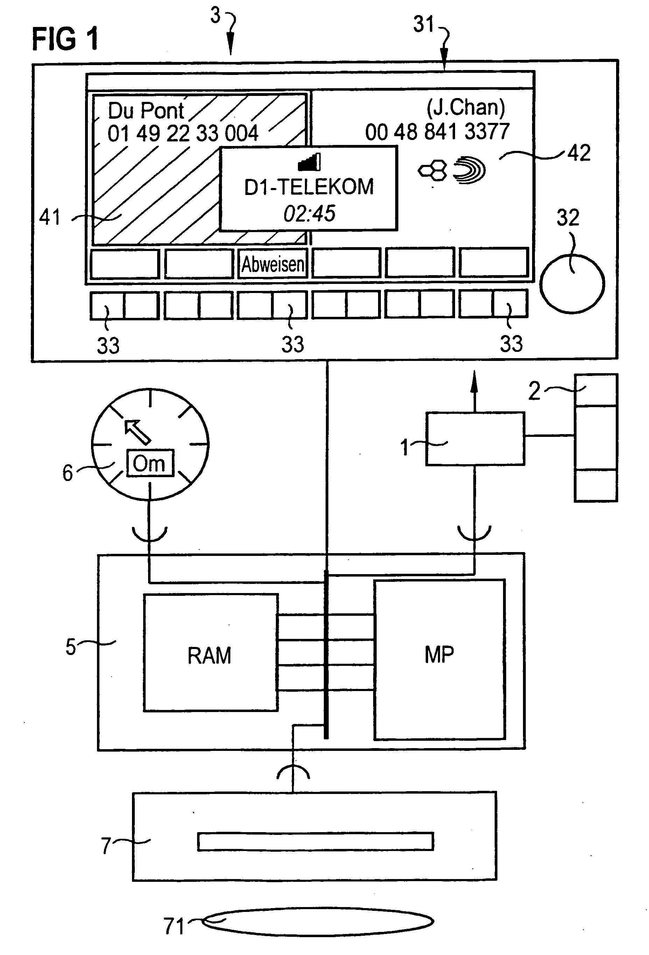

Figur 1 veranschaulicht ein Fahrerinformationssystem für einen Personenkraftwagen, das eine Mobilfunkeinheit 1 für drahtlose Sprach- und Datenübertragung im GSM-Standard aufweist. Mit der Mobilfunkeinheit ist eine Lautsprecher-/Mikrofoneinheit 2 in Form eines Telefonhörers verbunden.

Die Mobilfunkeinheit 1 wird über ein Multifunktions-Bedienteil 3 bedient. Dieses weist eine Anzeigeeinrichtung 31, bei der es sich um einen TFT-LCD-Bildschirm handelt, sowie einen Drehknopf 32 und Tasten 33 als mechanische Bedienelemente auf. In der Anzeigeeinrichtung 31 sind durch zwei Bildschirmsektoren zwei Fernsprechteilnehmer (41; 42) dargestellt.

Das Multifunktions-Bedienteil 3 und die Mobilfunkeinheit 1 sind über einen Systembus mit einer Recheneinheit 5 verbunden. Die Recheneinheit 5 verfügt über einen Mikroprozessor und einen Arbeitsspeicher. Die Recheneinheit 5 stellt die Funktionalität eines PC bereit, auf dem verschiedene Anwendungsprogramme aufrufbar sind. Darunter befindet sich eine Navigationssoftware. Zur Positionsermittlung stehen Positionssensoren 6 zur Verfügung. Ferner verfügt die Recheneinheit Zugriff auf ein Massenspeicherlaufwerk 7 für ein Speichermedium 71.

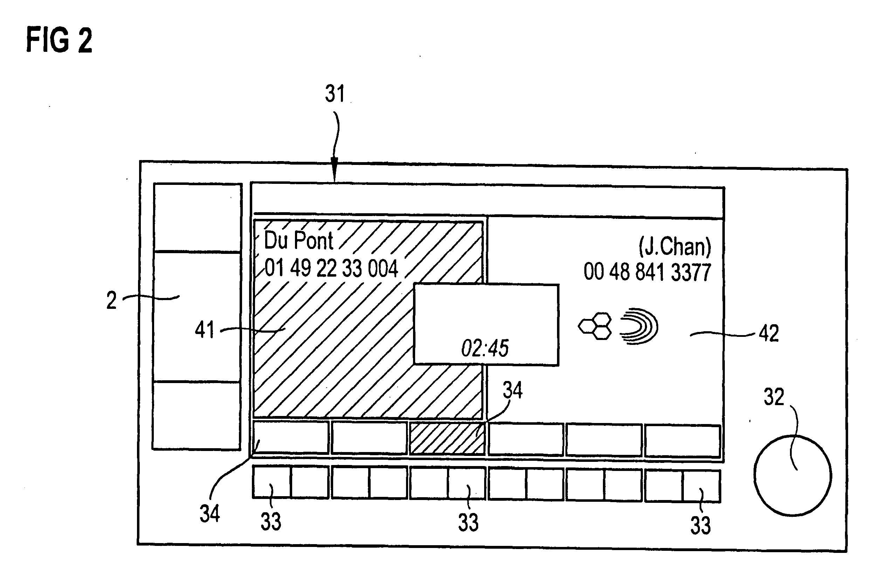

Figur 2 zeigt ein autonomes Telekommunikations-Endgerät mit einer Lautsprecher-/Mikrofoneinheit 2 und einer Anzeigeeinrichtung 31. Ein Benutzer führt gerade ein Gespräch mit einem Fernsprechteilnehmer 41. Dieser ist im linken Sektor der Anzeigeeinrichtung markiert oder hervorgehoben dargestellt. Ein soeben eingehender Anruf eines weiteren Fernsprechteilnehmers 42 wird im Rechten Sektor der Anzeigeeinrichtung 31 angezeigt, da die Funktion "Anklopfen" aktiviert ist.

Es werden sowohl die Telefonnummern als auch die Namen der Fernsprechteilnehmer angezeigt. Für letzteres ist erforderlich, dass der betreffende Fernsprechteilnehmer im Telekommunikations-Endgerät mit seiner Anschlusskennung (Telefonnummer) und seinem Namen gespeichert ist.

Der Benutzer kann mit dem Drehknopf 32 zum Fernsprechteilnehmer 42 wechseln, wodurch der linke Sektor der Anzeigeeinrichtung 31 markiert wird. Anschließend wird durch axiales Drücken des Drehknopfes 32 der Anruf des Teilnehmers 42 angenommen und gleichzeitig das Gespräch mit Teilnehmer 41 gehalten.

Alternativ kann der Benutzer den Anruf des Teilnehmers 42 abweisen. Hierzu muss er diejenige Taste 33 betätigen, die mit der Funktion "Abweisen" belegt ist. Auf die entsprechende Taste wird von der Anzeigeeinrichtung durch einen Bezeichner 34 oder ein Etikett hingewiesen. Der Bezeichner 34 wird zur entsprechenden Taste 33 benachbart ausgegeben. Der Bezeichner zeigt die Funktion durch ein Symbol oder durch eine Beschriftung an.

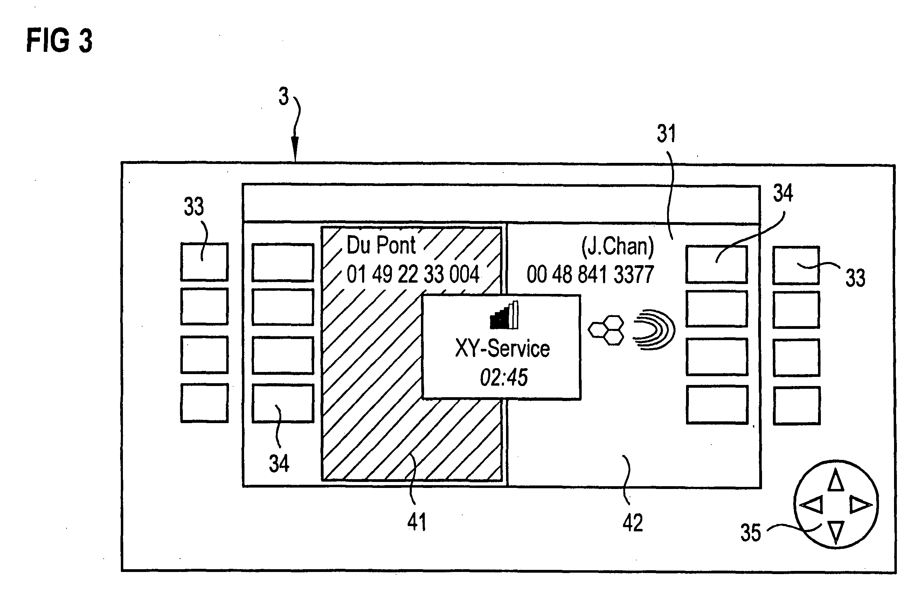

In Figur 3 ist ein Multifunktions-Bedienteil 3 dargestellt, das die Funktionen eines Telekommunikations-Endgeräts steuert. In der Bedienung ergeben sich gegenüber dem Telekommunikations-Endgerät von Figur 2 nur insofern Unterschiede, als statt eines Drehknopfes eine Kreuzwippe 35 zum Einsatz kommt und die Tasten 33 seitlich der Anzeigeeinrichtung 31 angeordnet sind.

Ein zentraler Bereich der Anzeigeeinrichtung 31 ist für die Anzeige des Mobilfunkbetreibers, in dessen Netz die Mobilfunkeinheit eingebucht ist, des Empfangspegels und der Uhrzeit oder der Gesprächsdauer reserviert.

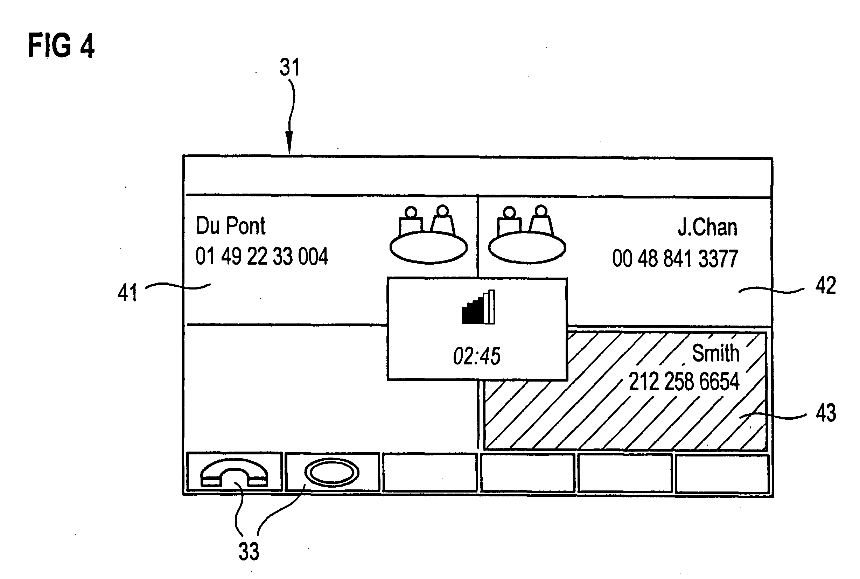

Figur 4 zeigt eine Anzeigeeinrichtung 31, auf der mittels Symbolen (Tisch mit zwei Personen) das Führen einer Telefonkonferenz mit den Fernsprechteilnehmern 41 und 42 visualisiert ist. Nach Meldung eines zusätzlichen Anrufs durch Teilnehmer 43 ist der Benutzer mit einem Bedienelement zu Teilnehmer 43 gewechselt. Der ausgewählte Teilnehmer 43 ist daher markiert dargestellt. Diese Hervorhebung gibt den Status als aktive Fernsprechverbindung wieder. Es ist erkennbar, dass die Telefonkonferenz mit den Teilnehmern 41 und 42 auf den Status "Halten" gesetzt ist, da diese Teilnehmer keine Markierung aufweisen. Es wird nur mit Teilnehmer 43 gesprochen.

In der Anzeigeeinrichtung sind Bildschirmtasten 33 (Touch-Screen) mit einem Telefonhörer und einem ovalen Tisch dargestellt. Drückt der Benutzer auf die Taste 33 mit dem Telefonhörer, so wird das Gespräch mit Teilnehmer 43 beendet und zur Telefonkonferenz zurück gewechselt. Betätigt dagegen der Benutzer die Taste mit dem Tischsymbol, so wird Teilnehmer 43 in die laufende Telefonkonferenz einbezogen.

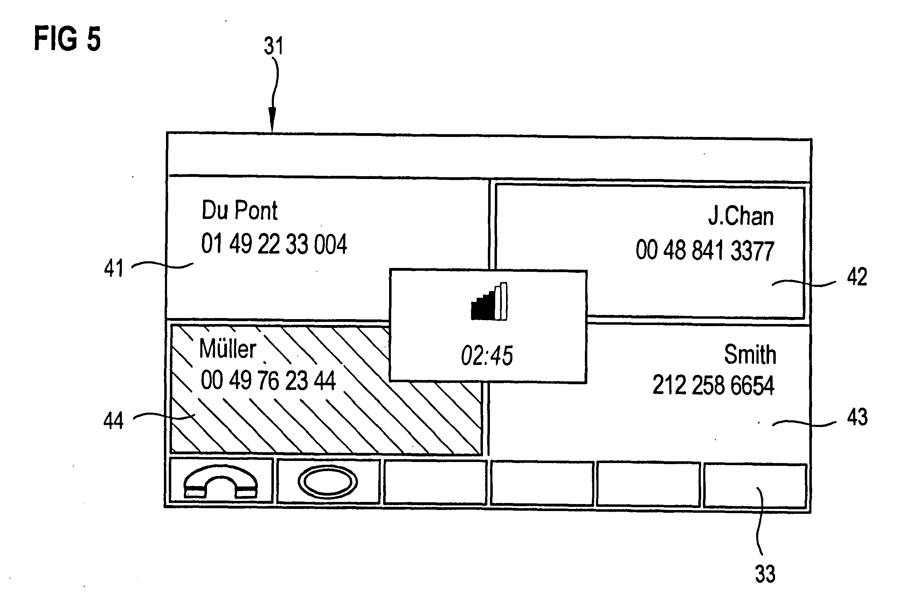

In Figur 5 ist eine Anzeigeeinrichtung 31 dargestellt, auf der vier Fernsprechverbindungen oder Anrufe dargestellt sind. Mit den Teilnehmern 41, 42 und 43 sind parallele Fernsprechverbindungen aufgenommen worden. Momentan spricht der Benutzer mit Teilnehmer 42. Dies ist durch die Umrandung des entsprechenden Sektors der Anzeigeeinrichtung optisch zum Ausdruck gebracht. Die Verbindung zu den Teilnehmern 41 und 43 wird gehalten.

Ein neu eingehender Anruf des Teilnehmers 44 wird durch eine Färbung des Hintergrunds des entsprechenden Sektors der Anzeigeeinrichtung, der dem Teilnehmer 44 zugeordnet wird, hervorgehoben. Der Benutzer hat die Möglichkeit, durch Betätigung eines Bedienelements, insbesondere durch Drücken eines Dreh-/Druckreglers, das Gespräch mit Teilnehmer 42 ebenfalls zu halten und den Teilnehmer 44 auszuwählen, das heißt zu Teilnehmer 44 zu wechseln. Alternativ kann er durch Drücken einer entsprechenden Taste 33 (Symbol des ovalen Tisches) den Teilnehmer 44 zu einer Telefonkonferenz mit Teilnehmer 42 hinzunehmen.

## Patentansprüche

1. Telekommunikations-Endgerät, das aufweist:
a. eine Anzeigeeinrichtung (31) zum Darstellen von Fernsprechverbindungen mit mehreren Fernsprechteilnehmer (41; 42; 43; 44),
b. wenigstens einen Drehknopf (32) zum Markieren eines oder mehrerer dargestellter Fernsprechteilnehmer (41; 42; 43; 44) auf der Anzeigeeinrichtung (31),
c. Tasten (33) zum Ändern eines Status der Fernsprechverbindung in Bezug auf einen durch Markierung ausgewählten Fernsprechteilnehmer,
**dadurch gekennzeichnet, dass** wenigstens einer der Tasten (33) in Abhängigkeit von den möglichen Optionen zum Ändern des Status der Fernsprechverbindung eine Status ändernde Funktion zugeordnet ist und dass die Funktion von der Anzeigeeinrichtung (31) visuell durch einen Bezeichner (34) erläutert ist, der benachbart zu der Taste (33) ausgegeben ist.

2. Telekommunikations-Endgerät nach Anspruch 1, **dadurch gekenneichnet, dass** der Status der Fernsprechverbindung anzeigbar ist.

3. Multifunktions-Bedienteil für ein Kraftfahrzeug, **dadurch gekennzeichnet, dass** es ein Telekommunikations-Endgerät nach einem der vorhergehenden Ansprüche aufweist.

## Claims

1. Telecommunications terminal having:
a. a display device (31) to show telephone connections to a plurality of telephone subscribers (41; 42; 43; 44),
b. at least one rotary knob (32) to mark one or more shown telephone subscribers (41; 42; 43; 44) on the display device (31),
c. keys (33) to change the status of the telephone connection for a marked for selection telephone subscriber,
**characterized in that** a status-changing function is assigned to at least one of the keys (33) on the basis of the possible options to change the status of the telephone connection, and **in that** the function is explained visually by the display device (31) using a designator (34) which is output next to the key (33).

2. Telecommunications terminal according to claim 1, **characterized in that** the status of a telephone connection can be displayed.

3. Multifunctional control unit for a motor vehicle, **characterized in that** it has a telecommunications terminal according to one of the preceding claims.

## Revendications

1. Terminal de télécommunication présentant:
a. un dispositif de visualisation (31) pour représenter des communications téléphoniques avec plusieurs abonnés téléphoniques (41 ; 42 ; 43 ; 44),
b. au moins un bouton tournant (32) pour marquer un ou plusieurs abonnés téléphoniques représentés (41 ; 42 ; 43 ; 44) sur le dispositif de visualisation (31),
c. des touches (33) pour modifier un état de la communication téléphonique par rapport à un abonné téléphonique sélectionné par marquage,
**caractérisé en ce qu'**une fonction modifiant l'état est affectée à au moins une des touches (33) en fonction des options possibles pour modifier l'état et **en ce que** la fonction est expliquée visuellement par le dispositif de visualisation (31) au moyen d'un identificateur (34) qui est sorti à côté de la touche (33).

2. Terminal de télécommunication selon la revendication 1, **caractérisé en ce que** l'état de la communication téléphonique est affichable.

3. Appareil de communication à fonctions multiples pour un véhicule automobile, **caractérisé en ce qu'**il présente un terminal de communication selon l'une quelconque des revendications précédentes.
